**Europäisches Patentamt**

**European Patent Office**

**Office européen des brevets**

(19)

(11) Veröffentlichungsnummer: **0 187 942**
**B1**

(12) # EUROPÄISCHE PATENTSCHRIFT

(45) Veröffentlichungstag der Patentschrift:
27.04.88

(21) Anmeldenummer: 85115429.4

(22) Anmeldetag: 05.12.85

(51) Int. Cl.⁴: **B 29 C 65/06,** B 65 B 13/32

(54) Gerät zum Verbinden der Enden eines thermoplastischen Kunststoffbandes.

(30) Priorität: 27.12.84 CH 6183/84

(43) Veröffentlichungstag der Anmeldung:
23.07.86 Patentblatt 86/30

(45) Bekanntmachung des Hinweises auf die Patenterteilung:
27.04.88 Patentblatt 88/17

(84) Benannte Vertragsstaaten:
DE FR GB IT SE

(56) Entgegenhaltungen:
CH-A-494 632
DE-A-1 704 048
DE-A-1 924 061
DE-A-2 802 034
FR-A-2 122 891
GB-A-2 055 685

(73) Patentinhaber: Strapex AG, Nordstrasse 1, CH- 5610 Wohlen (CH)

(72) Erfinder: Niedrig, Franklin F., im Unterzelg 31, CH- 8965 Berikon (CH)

(74) Vertreter: Patentanwälte Schaad, Balass & Partner, Dufourstrasse 101 Postfach, CH- 8034 Zürich (CH)

EP 0 187 942 B1

## Beschreibung

Die Erfindung bezieht sich auf ein Gerät der im Oberbegriff des Anspruchs 1 genannten Art.

Ein solches Gerät dient geimeinsam mit einer separaten Spannvorrichtung zum Umreifen eines Packstückes oder mehrer zu bündelnder Gegenstände. Die Spannvorrichtung weist üblicherweise ein Schlitzrad als Spannelement auf, in dessen Schlitz das obere der beiden sich überlappenden Bandenden eingelegt und durch Drehen des Schlitzrades gespannt wird. Um die beiden Bandenden miteinander zu verbinden, wird das einen seitlich offenen Schlitz aufweisende Gerät auf das Packstück aufgesetzt und soweit seitlich verschoben, bis sich die beiden Bandenden übereinanderliegend im Schlitz des Gerätes befinden. Die Verbindung erfolgt durch Reibungsschweissen, wozu die beiden Bandenden bis zum Verschmelzen aneinander gerieben werden.

Ein nach dem Oberbegriff des Anspruchs 1 aus der GB-A-2 055 685 bekanntes Gerät weist eine untere feststehende Schweissbacke und eine obere hin-und herschwingend antreibbare Schweissbacke auf. Die untere Schweissbacke ist dabei durch die Grundplatte des Gerätes gebildet. Zum Verschweissen wird nun bei dem bekannten Gerät die um eine sich rechtwinklig zur Ebene der Schweissbacken erstreckende Achse schwenkbar gelagerte obere Schweissbacke durch einen Exzenter angetrieben, dessen Welle sich parallel zur Ebene der Schweissbacken erstreckt. Dabei greift die obere Schweissbacke am oberen Bandende an, um dieses relativ zum unteren Ende im wesentlichen quer zur Bandrichtung hin- und her zu bewegen.

Sofern genügend Leistung zum Antrieb eines solchen Gerätes zur Verfügung steht, wenn die Leistung beispielsweise aus dem Lichtnetz bezogen wird, ergeben sich keine Probleme mit dem Antrieb. Soll ein solches Gerät jedoch als Handgerät ausgebildet werden, dann wird die Abhängigkeit vom Anschluss an eine Steckdose des Lichtnetzes als Nachteil empfunden. Es ist zwar möglich, den Antrieb eines solchen Gerätes für Batteriebetrieb zu bemessen und eine entsprechend grosse Batterie in das Gerät einzubauen. Dabei wird das Gerät jedoch schwer und unhandlich, so dass der Vorteil gegenüber dem Netzbetrieb zumindest teilweise wieder aufgehoben wird.

Der Erfindung liegt daher die Aufgabe zugrunde, ein Gerät der eingangs genannten Art zu schaffen, welches bei handlichen Abmessungen und einem handlichen Gewicht für Batteriebetrieb geeignet ist.

Die gestellte Aufgabe wird erfindungsgemäss durch die im kennzeichnenden Teil des Anspruchs 1 angegebenen Merkmale gelöst.

Bei einer solchen Lösung ist der Leistungsbedarf für den Antrieb des Gerätes überraschenderweise erheblich niedriger als bei dem bekannten Gerät, da die Schweisszunge das untere Bandende bewegt, welches im Gegensatz zum oberen Bandende nicht unter der Spannung der Spannvorrichtung steht, sondern vollständig frei beweglich ist. Das untere Bandende wird dabei relativ zum oberen, unter der Wirkung der Spannvorrichtung stehenden Bandende bewegt, so dass die Schweissverbindung trotzdem innerhalb des Spannbereiches erfolgt. Nach dem Erhärten der Schweissverbindung erfolgt üblicherweise die Trennung zwischen der Schweißstelle und dem Angriffspunkt der Spannvorrichtung am oberen Bandende. Durch den gegenüber dem Stand der Technik gesenkten Leistungsbedarf ist es nun möglich, das Gerät als handliches und relativ leichtes batteriebetriebenes Gerät auszubilden.

Bei einer bevorzugten Ausführungsform nach Anspruch 2 ist die Schweisszunge zur Aufnahme von seitlichen Kräften, also in Bandrichtung, besonders stabil gelagert.

Durch eine bevorzugte Ausführungsform nach Anspruch 3 wird der Reibungswiderstand zwischen der Schweisszunge und dem Führungskanal auf ein Minimum herabgesetzt. Eine solche Ausführungsform ist auch zur Aufnahme von grossen Druckkräften ohne wesentlichen Verschleiss besonders geeignet. Die Wälzkörper können entweder Rollen oder Kugeln sein.

Gemäss einer bevorzugten Ausführungsform nach Anspruch 4 sind die Wälzkörper durch zwei Reihen von Kugeln gebildet. Durch das Einlassen der Kugeln in an den Rändern der Schweisszunge angeordnete Längsrillen ergibt sich eine Führung, welche sowohl zur Aufnahme von Druck, wie auch zur Aufnahme von seitlichen Scherkräften geeignet ist.

Anspruch 5 beschreibt eine bevorzugte Ausführungsform für die antriebsmässige Verbindung der Schweisszunge mit einem Antriebselement. Durch die zur Schweisszunge rechtwinklige Anordnung der Exzenterwelle werden nur wenige Übertragungselemente benötigt, im Idealfall lediglich ein Lager zwischen dem Exzenter und der Schweisszunge.

Durch eine besonders bevorzugte Ausführungsform nach Anspruch 6 ist das Gerät unabhängig vom Anschluss an ein elektrisches Leitungsnetz oder von einer Druckluftquelle an einem beliebigen Ort verwendbar.

Eine Ausführungsform nach Anspruch 7 weist den Vorteil auf, dass nicht die Schweisszunge, sondern die ihr gegenüberliegende Klemmfläche zum Klemmen der Bandenden bewegbar ist.

Bei einer Ausführungsform nach Anspruch 8 ist die auf die Bandenden ausgeübte Klemmkraft allein von der Tellerfeder abhängig, wenn der Betätigungshebel am Ende seines Betätigungsweges an einem Anschlag anliegt. Dadurch ist gewährleistet, dass unabhängig von der durch die Bedienungsperson aufgebrachten Kraft eine stets gleichbleibende Klemmkraft auf die Bandenden ausgeübt wird. Selbstverständlich ist es möglich, durch Einstellmittel die gewünschte Klemmkraft einzustellen.

Bei einer bevorzugten Ausführungsform nach Anspruch 9 wird der Antriebsmotor der Schweisszunge ohne zusätzliche Betätigungsmittel beim Betätigen des Betätigungshebels eingeschaltet, bevor die volle Klemmkraft auf die Bandenden einwirkt. Der Anlauf des Motors vor Erreichen der vollen Klemmkraft ist mit dem Vorteil verbunden, dass der Motor und auch die Batterie für eine kleinere Leistung bemessen sein kann, als wenn der Motor erst nach Erreichen der grössten Klemmkraft die Schweisszunge in Bewegung versetzen müsste.

Gemäss Anspruch 10 erfolgt die Ausschaltung des Motors bewegungsanzahlabhängig, so dass unabhängig von der Bedienungsperson stets gleichbleibende Schweissverbindungen möglich sind. Das Ausschalten des Motors vor dem Lösen der Klemmverbindung ist jedoch erforderlich, um durch eine Abkühlzeit zu gewährleisten, dass sich die Schweissverbindung festigt.

Bei einer besonders bevorzugten Ausführungsform nach Anspruch 11 dient das Gerät zum Verbinden der Bandenden auch gleichzeitig zum Abtrennen des Bandes vom Bandvorrat. In der bevorzugten Ausführungsform wird das Messer gemeinsam mit der Schweisszunge angetrieben, so dass kein zusätzlicher Antrieb erforderlich ist und zudem die Abtrennung automatisch erfolgt. Durch die synchrone und mit gleichem Hub erfolgende Bewegung des Messers relativ zur Schweisszunge wird bei unten liegender Schweisszunge vermieden, dass das untere Bandende vom Messer nach dem Durchschneiden des oberen Bandendes beschädigt wird, da zwischen dem Messer und dem durch die Schweisszunge bewegten unteren Bandende keine Relativbewegung stattfindet.

Durch eine Ausführungsform nach Anspruch 12 erfolgt die Betätigung des Messers bei der Bewegung des Betätigungshebels, so dass der Schneidvorgang von der Bedienungsperson nicht gesondert beachtet werden muss.

Durch eine Ausführungsform nach Anspruch 13 wird das Schweissgerät quer zur Bandrichtung angesetzt. Dadurch ist es möglich, das Schweissgerät in unmittelbarer Nähe der Spannvorrichtung und etwa im gleichen Sinne wie eine Plombenzange am Band anzusetzen.

Anhand der Zeichnungen wird ein Ausführungsbeispiel der Erfindung näher erläutert. Es zeigt:

Fig. 1 die Anwendung eines Gerätes zum Verbinden der Enden eines Umschnürungsbandes in Kombination mit einer separaten Spannvorrichtung, aufgesetzt auf einem Packstück, in einer Seitenansicht,

Fig. 2 eine Draufsicht nach der Fig. 1,

Fig. 3 das Verbindungsgerät im Längsschnitt III - III nach der Fig. 4,

Fig. 4 eine Draufsich auf das Gerät nach der Fig. 3,

Fig. 5 eine Seitenansicht in Pfeilrichtung V nach der Fig. 4 und

Fig. 6 eine Schnittansicht VI - VI nach der Fig. 5.

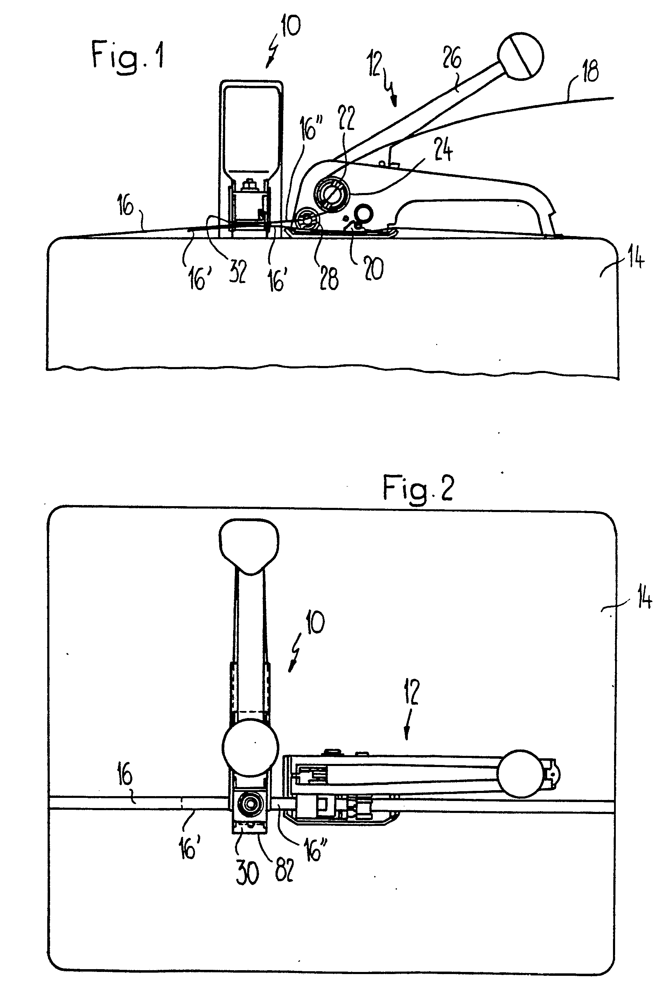

In der Fig. 1 sind das Verbindungsgerät 10 und eine Spannvorrichtung 12 auf einem Packstück 14 aufgesetzt. Um das Packstück 14 ist ein thermoplastisches Kunststoffband 16 herumgelegt. Das innenliegende Ende 16' des Bandes 16 wird vom aussenliegenden Ende 16'' über eine bestimmte Strecke überlappt. Im dargestellten Ausführungsbeispiel nach der Fig. 1 ist das aussenliegende Ende 16'' über den Bandabschnitt 18 noch mit einer nicht dargestellten Vorratsspule verbunden.

Die Spannvorrichtung 12 weist zum, Festhalten des innnliegenden Abschnittes 16' eine Klemmeinrichtung 20 auf. Der aussenliegende Bandabschnitt 16'' ist in den Schlitz 22 eines Schlitzrades 24 eingelegt und durch eine Drehbewegung des Schlitzrades im Gegenuhrzeigersinn gespannt worden. Für den Spannvorgang ist ein Handhebel 26 zu betätigen. Die Spannvorrichtung 12 weist ferner eine Schneideinricthtung 28 auf, die im vorliegenden Fall jedoch nicht benötigt wird, da das Verbindungsgerät 10 eine Schneideinrichtung aufweist, wie nachstehend noch erläutert werden wird. Die Schneideinrichtung 28 der Spannvorrichtung 12 hingegen wird bei der zum Stand der Technik zählenden Plombenverbindung beansprucht.

Aus der Fig. 2 geht hervor, dass sich das Verbindungsgerät 10 in der dargestellten Betriebsstellung rechtwinklig zur Bandrichtung erstreckt. Das Gerät 10 weist eine zum Abstützen auf dem Packstück 14 bestimmte Grundplatte 30 auf. Oberhalb der Grundplatte 30 ist ein zur Aufnahme der sich überlappenden Bandteile 16' und 16'' bestimmter Spalt 32 (Fig. 1) angeordnet. Die rechtwinklige Anordnung des Verbindungsgerätes 10 zur Spannvorrichtung 12 ist aus Platzgründen erforderlich, um die Verbindung möglichst nahe im Spannbereich an der Spannstelle herstellen zu können.

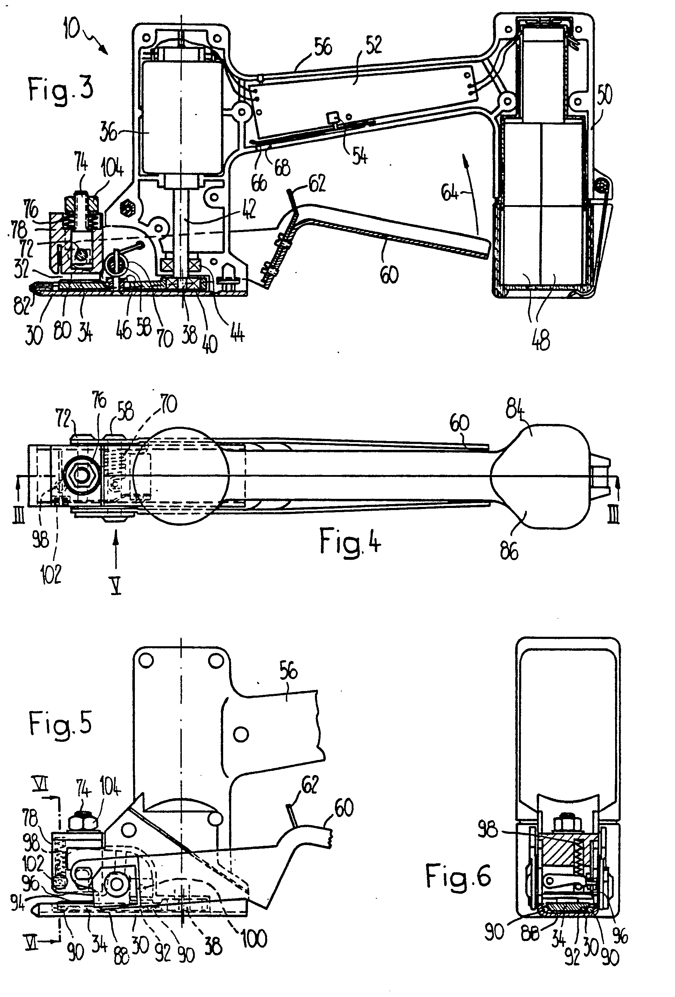

Das zur Herstellung einer Reibungs-Schweissverbindung dienende Gerät 10 weist gemäss Fig. 3 eine oberhalb der Grundplatte 30 angeordnete, quer zur Bandrichtung hin- und herschwingend antreibbare Schweisszunge 34 auf. Als Antrieb der Schweisszung 34 dient ein Gleichstrommotor 36, der über einen Exzenter 38 mittels eines Rillenkugellagers 40 mit, der Schweisszunge 34 gekuppelt ist. Die mit dem Motor 36 verbundene Exzentervelle 42 ist in einem weiteren Rillenkugellager 44 gelagert. Eine Führungsbuchse 46 dient zur höhenmässigen Führung der Schweisszunge 34.

Zur Speisung des Motors 36 dient eine aus mehreren Einzelzellen bestehende Batterie 48, welche in einem vom Motor 36 entfernten Gehäuseteil 50 untergebracht ist. Die Einschaltung des Motors 36 erfolgt über einen auf einer Leiterplatte 52 angeordneten Schalter 54. Die in einem als Handgriff ausgebildeten Gehäuseteil 56 angeordnete Leiterplatte 52 trägt die Schaltungselemente einer zur zeitabhängigen Ausschaltung des Motors 36 dienenden Steuerschaltungsanordnung. Dem Handgriff 56 liegt ein um eine Schwenkachse 58 schwenkbarer Klemmhebel 60 gegenüber. Der Klemmhebel 60 trägt einen Betätigungswinkel 62, um den Schalter 54 bei der Betätigung des Klemmhebels 60 in Pfeilrichtung 64 über, eine Blattfeder 66 zu betätigen. Dazu greift der Betätigungswinkel 62 in eine im mittleren Gehäuseteil 56 angeordnete Aussparung 68 ein. Zur Rückstellung des Klemmhebels 60 dient eine auf der Schwenkachse 58 angeordnete Torsionsfeder 70.

Der kurze Arm des Klemmhebels 60 ist über einen Achsbolzen 72, einen Bolzen 74 und eine Tellerfeder 76 mit einem Klemmstempel 78 verbunden. Der Klemmstempel 78 weist eine an den Spalt 32 angrenzende und der Schweisszunge 34 gegenüberliegende Klemmfläche 80 auf. An die Grundplatte 30 schliesst sich eine Keilnase 82 an.

Aus der Fig. 4 ist ersichtlich, dass das Gehäuse des Gerätes, zu welchem auch die Gehäuseteile 50 und 56 gehören, aus zwei Hälften 84 und 86 zusammengesetzt ist. Ferner ist aus der Fig. 4 ersichtlich, dass der Klemmhebel 60 im Querschnitt U-förmig ist.

Aus den Fig. 5 und 6 ist ersichtlich, dass die Grundplatte 30 im Querschnitt U-förmig ist, um einen Führungskanal 88 für die Schweisszunge 34 zu bilden, welche darin auf Kugeln 90 gelagert ist. An beiden Längsrändern der Schweisszunge 34 ist je eine Reihe der Kugeln 90 angeordnet. Die Kugeln 90 sind dabei mindestens teilweise in Längsrillen 92 in der Schweisszunge 34 eingelassen. Obwohl in der Fig. 5 nur die erste und die letzte Kugel, 90 einer Reihe dargestellt ist, ist die ganze Reihe zwischen diesen beiden dargestellten Kugeln 90 mit Kugeln ausgefüllt. Durch die beschriebene Anordnung der Kugeln 90 ist die Schweisszunge 34 nicht nur zur Aufnahme von oben wirkenden Kräften, sondern auch zur Aufnahme von seitlich wirkenden Kräften im Führungskanal gelagert. Durch seitlich wirkende Kräfte wird die Schweisszunge 34 dann belastet, wenn sie mindestens einen Teil der Bandspannung aufnehmen muss.

Die Schweisszunge 34 weist eine nach oben gerichtete Grifffläche 94 auf, um das unten liegende Bandende 16' (Fig. 1) derart sicher zu greifen, dass es zur Herstellung der Reibschweissverbindung durch die hin- und herschwingend antreibbare Schweisszunge 34 gegen das oben liegende Bandende 16'' (Fig. 1) gerieben wird.

Mit der Schweisszunge 34 ist über einen Bolzen 100 ein Messer 96 gekuppelt. Durch diese Kupplung wird das Messer 96, welches zum Trennen des oben liegenden Bandteiles 16'' (Fig. 1) bestimmt ist, synchron zur Schweisszunge 34 und mit gleichem Hub angetrieben. Das Messer 96 ist um den Bolzen 100 schwenkbar angeordnet, damit es auf das zu schneidende Band abgesenkt und von diesem abgehoben werden kann. Das Absenken und Anheben erfolgt zusammen mit dem Klemmstempel 78, mit dem es über eine Rolle 102 zur Mitnahme an seinem der Schwenkachse 100 entgegengesetzten Ende gekuppelt ist. Über eine im Klemmstempel 78 angeordnete Druckfeder 98 ist das Messer 96 in Richtung des zu schneidenden Bandteiles vorgespannt.

Die in der Fig. 3 dargestellte Leiterplatte 52 der Steuerschaltungsanordnung trägt insbesondere die nicht dargestellten Schaltungselemente eines Schwingungszählers, um nach erfolgter Einschaltung des Motors 36 durch den Schalter 54 die Anzahl Bewegungen auf einen einstellbaren Wert zu begrenzen.

Die auf dem Bolzen 74 gemäss Fig. 3 angeordnete Mutter 104 dient zum Halten und zum Vorspannen der Tellerfeder 76.

Nachfolgend soll die Anwendung des beschriebenen Gerätes in Verbindung mit einer Spannvorrichtung näher erläutert werden. Nach dem Festklemmen des Bandes 16 in der Nähe des inneren Bandendes 16' durch die Klemmeinrichtung 20 der Spannvorrichtung 12 wird das Band 16 um das Packstück 14 herumgelegt und nach dem Einlegen in den Schlitz 22 des Schlitzrades 24 durch Betätigung des Handhebels 26 gespannt. Innerhalb des gespannten Bereiches des Bandes 16 wird das Verbindungsgerät 10 mit seiner Keilnase 82 unter die beiden übereinanderliegen Bandabschnitte 16' und 16'' geschoben, so dass diese im Spalt 32 liegen. Durch Betätigung des Klemmhebels 60 in Pfeilrichtung 64 wird der Klemmstempel 78 auf die sich überlappenden Bandbereiche 16' und 16'' abgesenkt und dabei der Motor 36 eingeschaltet, bevor die volle Klemmkraft erreicht ist. Bei voller Klemmkraft greift die Schweisszunge 34 am unten liegenden freien Bandende 16' an und bewegt dieses mit einem Hub in der Grössenordnung von einem Millimeter quer zur Bandrichtung gegen den oben liegenden Bandabschnitt 12'', welcher durch die Klemmfläche 80 des Klemmstempels 78 festgehalten wird. Durch die entstehende Reibungswärme werden die beiden Bandabschnitte 16' und 16'' miteinander verschweist. Gleichzeitig mit dem Schweissvorgang beginnt das Messer 96 den oben liegenden Bandabschnitt 16'' unmittelbar neben der Schweißstelle zu durchtrennen. Wenn der Motor 36 zur Schweiss- und Trennbewegung nach dem Durchtrennen des oberen Bandabschnittes 16'' noch weiter läuft, so ist der untere Bandabschnitt 16' durch das nun auf ihn anliegende Messer 96 nicht gefährdet, da infolge der Kupplung des Messers 96 mit der Schweisszunge 34 keine Relativbewegung zwischen dem Messer 96 und dem unteren Bandabschnitt 16' erfolgt. Der Schweissvorgang wird durch den auf der Leiterplatte 52 angeordneten Zeitschalter durch automatisches Ausschalten des Motors 36 unterbrochen. Erst eine kurze Zeit nach der Unterbrechung des Schweissvorganges darf der Klemmhebel 60 losgelassen werden, um zu gewährleisten, dass die Schweissverbindung hält. Hierzu wurde eine

Vorrichtung vorgesehen, welche vor der Betätigung des Gerätes verriegelt wird und nachher von Hand gelöst werden muss.

Der besondere Vorteil des erfindungsgemässen Gerätes liegt darin, dass es anstelle einer Plombenzange zum Verbinden der Enden eines thermoplastischen Kunststoffbandes dient und keinen Anschluss an ein Leitungsnetz benötigt. Durch das Schweissen im Spannbereich liegt die zum Spannen beanspruchte Stelle des Bandes ausserhalb des am Packstück verbleibenden Bandabschnittes, so dass eine eventuelle Beschädigung durch ein zum Spannen am Band angreifendes Spannelement, ob Schlitzrad oder auch Reibrad, kein Nachteil ist.

Durch Verbinden mit einem Ladekabel kann ein Netzdauerbetrieb realisiert werden.

**Patentansprüche**

1. Gerät zum Verbinden der Enden (16', 16"), eines um mindestens einen Gegenstand (14) mittels einer separaten Spannvorrichtung (12) gespannten thermoplastischen Kunststoffbandes (16), mit einem oberhalb einer zum Abstützen am Gegenstand (14) dienenden Grundplatte (30) zur Aufnahme der sich überlappenden Bandteile bestimmten Spalt (32), an welchen eine im wesentlichen quer zur Bandrichtung hin- und herschwingend antreibbare, zum Reibungsschweissen bestimmte Schweisszunge (34) und eine der Schweisszunge gegenüberliegende Klemmfläche (80) angrenzt, dadurch gekennzeichnet, dass die Schweisszunge (34) im Bereich der Grundplatte (30) gelagert ist und zum Angreifen am unteren Bandende (16') eine nach oben gerichtete Grifffläche (94) aufweist.

2. Gerät nach Anspruch 1, dadurch gekennzeichnet, dass die Grundplatte (30) einen sich quer zur Bandrichtung erstreckenden, die Schweisszunge (34) aufnehmenden Führungskanal (88) aufweist.

3. Gerät nach Anspruch 2, dadurch gekennzeichnet, dass die Schweisszunge (34), im Führungskanal (88) auf Wälzkörpern (90) gelagert ist.

4. Gerät nach Anspruch 3, dadurch gekennzeichnet, dass die Wälzkörper in je einer Reihe an beiden Längsrändern der Schweisszunge (34) angeordnete und in Längsrillen (92) mindestens teilweise in der Schweisszunge (34) eingelassene Kugeln (90) sind.

5. Gerät nach einem der vorstehenden Ansprüche, dadurch gekennzeichnet, dass die Schweisszunge (34) mit eine Exzenter (38) gekuppelt ist, dessen Welle (42) sich rechtwinklig zur Ebene der Schweisszunge (34) erstreckt.

6. Gerät nach Anspruch 5, dadurch gekennzeichnet, dass die Welle (42) des Exzenters (38) mit einem Gleichstrommotor (36) gekuppelt ist, der an eine im Gerät (10) angeordnete Batterie (48) anschaltbar ist.

7. Gerät nach einem der vorstehenden Ansprüche, dadurch gekennzeichnet, dass die der Schweisszunge (34) gegenüberliegende Klemmfläche (80) an einem mittels eines Betätigungshebels (60) gegen die Kraft einer Rückstellfeder (70) absenkbaren Klemmstempel (78) angeordnet ist.

8. Gerät nach Anspruch 7, dadurch gekennzeichnet, dass der Klemmstempel (78) mittels einer Tellerfeder (76) einfedernd angeordnet ist.

9. Gerät nach Anspruch 6 und 7, dadurch gekennzeichnet, dass der Betätigungshebel (60) Mittel (62) zum Betätigen eines Schalters (54) zum Einschalten des Gleichstrommotors (36) aufweist, welche Mittel (62) derart angeordnet sind, dass der Motor (36) eingeschaltet wird, bevor die Bandteile (16', 16") durch den Klemmstempel (78) aneinandergepresst sind.

10. Gerät nach Anspruch 9, dadurch gekennzeichnet, dass ein den Stromkreis des Motors (36) unterbrechender Schalter (52) vorgesehen ist, der die Anzahl Bewegungen zählt.

11. Gerät nach einem der vorstehenden Ansprüche, dadurch gekennzeichnet, dass ein zum Trennen des oben liegenden Bandteiles (16") bestimmtes Messer (96) derart mit der Schweisszunge (34) gekuppelt ist, dass es synchron zur Schweisszunge und mit gleichem Hub antreibbar ist.

12. Gerät nach Anspruch 7 und 11, dadurch gekennzeichnet, dass das Messer (96) durch eine Feder (98) in Richtung des zu schneiden den Bandteiles (16") vorgespannt und gemeinsam mit dem Klemmstempel (78) absenkbar angeordnet ist.

13. Gerät nach Anspruch 7, dadurch gekennzeichnet, dass sich der Betätigungshebel (60) und ein dazu im wesentlichen paralleler Handgriff (56) rechtwinklig zur Bandrichtung erstrecken.

**Claims**

1. Apparatus for connecting the ends (16', 16") of a thermoplastic plastics tape (16) tensioned by means of a separate tensioning means (12) around at least one object (14), with a slot (32) above a base plate (30) serving as a support on the object (14), which slot serves to receive the overlapping tape sections and is adjoined by a welding tongue (34) for friction-welding, the welding tongue being drivable to swing to and fro substantially transversely of the direction of the tape, and by a clamping surface (80) opposite the welding tongue, characterised in that the welding tongue (34) is supported in the region of the base plate (30) and has an upwardly directed gripping surface (94) for engaging on the lower end of the tape (16').

2. Apparatus according to Claim 1, characterised in that the base plate (30) has a guide channel (88) extending transversely of the direction of the tape and receiving the welding tongue (34).

3. Apparatus according to Claim 2, characterised in that the welding tongue (34) is supported in the guide channel (88) on roller bodies (90).

4. Apparatus according to Claim 3, characterised in that the roller bodies are balls (90) disposed in respective rows at both longitudinal edges of the welding tongue (34) and at least partly embedded in the welding tongue (34) in longitudinal grooves (92).

5. Apparatus according to one of the preceding Claims, characterised in that the welding tongue (34) is coupled to a cam (38), the shaft (42) of which extends at right angles to the plane of the welding tongue (34).

6. Apparatus according to Claim 5, characterised in that the shaft (42) of the cam (38) is coupled to a direct current motor (36), which can be connected to a battery (48) located in the apparatus (10).

7. Apparatus according to one of the preceding Claims, characterised in that the clamping surface (80) opposite the welding tongue (34) is disposed on a clamping die (78) which can be lowered by means of an actuating lever (60) against the force of a return spring (70).

8. Apparatus according to Claim 7, characterised in that the clamping die (78) is disposed so as to be resilient by means of a dished spring (76).

9. Apparatus according to Claims 6 and 7, characterised in that the actuating lever (60) has means (62) for operating a switch (54) for switching on the direct current motor (36), which means (62) are disposed so that the motor (36) is switched on before the tape sections (16', 16") are pressed together by means of the clamping die (78).

10. Apparatus according to Claim 9, characterised in that a switch (52) is provided breaking the circuit of the motor (36), which switch counts the number of movements.

11. Apparatus according to one of the preceding Claims, characterised in that a blade (96) designed to cut the upper tape section (16") is coupled with the welding tongue (34) in such a way that it can be operated synchronously with the welding tongue and with the same stroke.

12. Apparatus according to Claims 7 and 11, characterised in that the blade (96) is initially stressed by means of a spring (98) in the direction of the tape section (16") to be cut, and is arranged to be lowered with the clamping die (78).

13. Apparatus according to Claim 7, characterised in that the actuating lever (60) and a handle (56) substantially parallel thereto extend at right angles to the direction of the tape.

**Revendications**

1. Appareil pour assembler les extrémités (16', 16") d'une bande de matière thermoplastique (16) tendue autour d'au moins un objet (14) au moyen d'un dispositif de serrage (12) séparé, avec une fente (32) disposée au-dessus d'une plaque de base (30) qui sert d'appui à l'objet (14) et destinée à recevoir les sections de bande en superposition, la fente (32) avoisinant une languette de soudage (34) pour le soudage par friction qui peut être animée d'un mouvement oscillant orienté essentiellement transversalement par rapport à la direction de la bande, et une surface de serrage (80) située en face de la languette de soudage, <u>caractérisé en ce</u> que la languette de soudage (34) est montée dans la région de la plaque de base (30) et présente une surface de prise (94) dirigée vers le haut pour saisir l'extrémité inférieure (16') de la bande.

2. Appareil selon la revendication 1, caractérisé en ce que la plaque de base (30) présente un canal de guidage (88) pour la languette de soudage (34), qui s'étend transversalement par rapport à la direction de la bande.

3. Appareil selon la revendication 2, caractérisé en ce que la languette de soudage (34) est montée dans le canal de guidage (88) sur des organes de roulement (90).

4. Appareil selon la revendication 3, caractérisé en ce que les organes de roulement sont constitués par des billes (90) disposées respectivement en une rangée sur chacun des bords longitudinaux de la languette de soudage (34) et insérées du moins en partie dans la languette de soudage (34) dans des rainures longitudinale (92).

5. Appareil selon l'une quelconque des revendications 1 à 4, caractérisé en ce que la languette de soudage (34) est couplée avec un excentrique (38) dont l'arbre (42) s'étend orthogonalement au plan de la languette de soudage (34).

6. Appareil selon la revendication 5, caractérisé en ce que l'arbre (42) de l'excentrique (38) est couplé avec un moteur à courant continu (36) qui peut être raccordé à une batterie (48) disposée dans l'appareil (10).

7. Appareil selon l'une quelconque des revendications 1 à 6, caractérisé en ce que la surface de serrage (80) située en face de la languette de soudage (34) est disposée sur un poinçon de serrage (78) pouvant être abaissé, contre la force d'un ressort de rappel (70), au moyen d'un levier de manoeuvre (60).

8. Appareil selon la revendication 7, caractérisé en ce que le poinçon de serrage (78) est commandé par un ressort à disques (76).

9. Appareil selon l'une des revendications 6 et 7, caractérisé en ce que le levier de manoeuvre (60) comprend des organes (62) pour l'actionnement d'un interrupteur (54) pour la mise en marche du moteur à courant continu (36), lesdits organes (62) étant disposés de telle façon que le moteur (36) est mis en marche avant que les sections de bande (16', 16") soient pressées l'une contre l'autre par le poinçon de serrage (78).

10. Appareil selon la revendication 9, caractérisé en ce qu'il comprend un interrupteur (52) qui coupe le circuit du moteur (36) et compte le nombre des mouvements.

11. Appareil selon l'une quelconque des revendications 1 à 10, caractérisé en ce qu'un couteau (96) destiné à sectionner la section supérieure (16") de la bande est couplé avec la languette de soudage (34) de telle façon qu'il peut être entraîné en synchronisme avec la languette de soudage et avec la même course.

12. Appareil selon l'une des revendications 7 et 11, caractérisé en ce que le couteau (96) subit une précontrainte par un ressort (98) dans la direction de la section de bande (16") à sectionner et qu'il peut être abaissé conjointement avec le poinçon de serrage (78).

13. Appareil selon la revendication 7, caractérisé en ce que le levier de manoeuvre (60) et une poignée (56) essentiellement parallèle à celui-ci s'étendent orthogonalement par rapport à la direction de la bande.

Fig. 1

Fig. 2

0 187 942

Fig. 3

Fig. 4

Fig. 5

Fig. 6

3